# EUROPÄISCHE PATENTSCHRIFT

(11) **EP 1 977 971 B1**
(45) Veröffentlichungstag und Bekanntmachung des Hinweises auf die Patenterteilung: **01.02.2017**
(21) Anmeldenummer: 07025058.4
(22) Anmeldetag: 22.12.2007
(51) Int. Cl.: B64G 1/40, B64G 5/00

(54) **Verfahren zur Enttankung von Raumfahrzeugen**
Method for defuelling spacecrafts
Procédé destiné à vidanger les réservoirs de carburant de véhicules spatiaux

(30) Priorität: 07.04.2007 DE 102007016716
(43) Veröffentlichungstag der Anmeldung: 08.10.2008
(73) Patentinhaber: Astrium GmbH, 85521 Ottobrunn (DE)
(72) Erfinder: Schwarting, Walter, 26127 Oldenburg (DE)
(74) Vertreter: Marschall, Stefan

(56) Entgegenhaltungen:
- WO-A1-98/42793
- WO-A2-2004/027226
- US-A- 5 562 130
- K Jokela ET AL: "DECONTAMINATION OF MMH- AND NTO/MON-PROPELLANT TANKS", European Space Agency, (Special Publication) ESA SP - Proceedings of Space Propulsion 2004 - 4th International Spacecraft Propulsion Conference, 4. Juni 2004 (2004-06-04), XP055242057, Gefunden im Internet: URL:http://articles.adsabs.harvard.edu/cgi -bin/nph-iarticle_query?2004ESASP.555E..55 J&defaultprint=YES&page_ind=0&filetype=.pd f [gefunden am 2016-01-15]

## Beschreibung

Die Erfindung betrifft ein Verfahren zur restlosen Entleerung von mit Oxidator-Mischungen vom Typ MON (Mixed Oxides of Nitrogen) befüllten Flüssigkeitstanks für Raumfahrzeuge.

Im Falle eines Startabbruchs oder einer Startverschiebung über eine maximal zulässige Zeitdauer hinaus müssen bereits befüllte Tanksysteme von Raketenstufen oder Satelliten wieder restlos entleert werden. Für diese Flüssig-Enttankung. Trocknung und eine sich anschließende Dekontamination von evakuierbaren Tanks werden in der Regel sogenannte Vakuum-Drying-Units eingesetzt. Nach einem grobem Ablassen der Treibstoff- bzw. Oxidator-Flüssigkeit wird bei diesen mit Hilfe von Vakuumpumpen ein Unterdruck in den Tanks erzeugt, um ein schnelles Verdampfen und effektives Abpumpen verbliebener Restmengen zu erreichen. Der Unterdruck muß hinreichend niedrig sein, um den Siededruck der Flüssigkeit zu erreichen, d.h., der absolute Druck muss bei der gegebenen Tank- und Flüssigkeitstemperatur unterhalb des Gleichgewichts-Drucks gemäß der Siedekurre, dem sogenannten Druck-Temperatur (p-T)-Diagramm, liegen. Nicht-evakuierbare Tanks werden durch einen Spülprozeß, auch als Ventilations-Prozeß bezeichnet, getrocknet und dekontaminiert.

Diese bekannten Enttankungsverfahren sind für die meisten Flüssig-Treibstoffe, wie Hydrazin und Hydrazin-Derivate, geeignet, ebenso wie für den Oxidator NTO (N₂O₄) . Für Oxidator-Mischungen vom Typ MON, die sogenannten Mixed Oxides of Nitrogen, ist jedoch weder der Abpump-Prozeß noch der Ventilations-Prozeß geeignet. Die Mixed Oxides of Nitrogen vom Typ MON-X entstehen durch die Lösung (Mischung) gasförmigen Stickstoff-Monoxids, NO, mit einem Masseanteil von X % in flüssigem N₂O₄. Sie zeichnen sich durch ihren variierenden NO-Anteil (X in Masse-Prozenten) aus, der zugleich einen wirksamen Schutz gegenüber Spannungsrißkorrosion der aus Titan bzw. dessen Legierungen bestehenden Tanks bietet. Das chemische Prinzip dieses Schutzes besteht darin, daß das Stickstoffdioxid, NO₂, zu NO und atomarem Sauerstoff, O_{;} dissoziiert, wobei eine Zugabe von NO das Gleichgewicht zum Stickstoffdioxid, NO₂, verschiebt und in Folge dessen die Anteile atomaren Sauerstoffs reduziert werden.

Beim Evakuieren der Flüssigkeit MON-X würde zunächst die niedriger siedende NO- Komponente, die einen wesentlich höheren Dampfdruck als N₂O₄ (NTO) aufweist, verdampfen und dadurch aus dem System entfernt. Damit würde jedoch der wichtige und unverzichtbare Schutz des Titan-Werkstoffs, aus dem der Tank besteht, gegen Spannungsrißkorrosion verloren gehen und der Tank müßte vor dem Start zur Vermeidung eines vorzeitigen Versagens infolge dieser Schadensart ausgetauscht werden.

Aus der Veröffentlichung "Decontamination of MMH- and NTO/MON-propellant tanks", JOKELA K., KÄLSCH I., 4th International Spacecraft Propulsion Conference, 2-9 June, 2004, Cagliari, Sardinia, Italy ist bereits ein Verfahren zur Entleerung von mit Oxidator-Mischungen vom Typ MON befüllten Flüssigkeitstanks für Raumfahrzeuge bekannt. Sie stellt den nächstliegenden Stand der Technik dar.

Hierbei ist es bekannt, daß der Tank zuerst bis auf eine Restmenge entleert und dann mit einem Inert-Gas gespült wird.

Aufgabe der Erfindung ist es, ein verfahren der eingangs genannten Art derart auszubilden, daß auch Titan-Tanks, die mit dem Oxidator MON-X betankt sind, ohne die Gefahr des Auftretens von Spannungsrißkorrosion wieder enttankt werden können.

Die Erfindung löst diese Aufgabe durch ein Verfahren mit den Schritten gemäß dem Kennzeichen des Patentanspruchs 1.

Die Enttankung und Dekontamination der Titan-Tanks, die mit dem Oxidator MON-X betankt wurden, erfolgt bei dem erfindungsgemäßen Verfahren nicht durch eine Evakuierung, sondern durch einen selektiven, primär auf das korrosiv wirkende N₂O₄ (NTO) bzw. auf das im Dampf monomere Stickstoffdioxid, NO₂, gerichteten Abtrennprozeß. Dies geschieht gemäß der Erfindung durch eine in einer vorgegebenen Reihenfolge stattfindende, selektive Abtrennung der Dampfphasen, bei der zunächst das Stickstoffdioxid, NO₂, durch Kondensation flüssig abgeschieden wird und daraufhin eine nur noch geringe Konzentration an NO₂ im Restgas NO verbleibt. Nach Absenkung der Kondensationstemperatur erfolgt weiterhin das Abscheiden des NO wobei gleich zu Beginn die restlichen Mengen des NO₂ abgeschieden werden. Dadurch bleibt die schützende gasförmige NO-Komponente bis zum Abschluß der Dekontamination in dem Kreislauf zirkulierend vorhanden. Da der Tank nach diesem Schritt trocken ist, kann er anschießend dekontaminiert werden.

Der Abtrennprozeß bewirkt dabei temperaturgesteuert zunächst eine Flüssigkeits-Abscheidung durch die primäre Kondensation von NO₂ und anschließend von NO. Nach einer weiteren Temperatursenkung erfolgt die Feststoff-Abscheidung oder De-Sublimation des NO. Um die Stufen-Belastung bei der De-Sublimation niedrig zu halten, finden die beiden Prozesse nicht seriell auf mehreren Kalt-Stufen, d.h. zeitlich gleichzeitig und in Flußrichtung hintereinander, sondern zeitlich gestaffelt nacheinander auf einer bzw. zwei Kalt-Stufen statt. Dieser Trennprozeß ist damit auf den primär abzuscheidenden Stoff selektiv einstellbar, indem zunächst die Kondensations-Temperatur so gewählt wird, dass nur der Dampf der höher siedenden Komponente Stickstoffdioxid, NO₂, entlang ihrer Dampfdruckkurve zwischen dem Tripelpunkt und dem kritischen Punkt zu Flüssigkeit kondensiert wird und dadurch die Hauptmenge des NTO flüssig abgezogen werden kann. Nach der Trocknung des Tanks noch verbleibender Dampf, bestehend aus NO und geringen Mengen NO₂, wird nun in einem zweiten Schritt bei abgesenkter Temperatur entlang der NO-Dampfdruckkurve kondensiert. Anschließend wird zwecks Dekontamination in einer Flüssigstickstoff-Stufe dann noch verbliebenes restliches NO de-sublimiert.

Die Vorteile der Erfindung liegen somit darin, daß mit dem erfindungsgemäßen Prozeß Titan-Tanks durchgängig und das Tankmaterial ständig gegen Korrosion schützend von der korrosiv wirkenden Komponente NTO und nachfolgend zudem von der NO-Gasphase entsorgt und dekontaminiert werden können. Nach dem Unterschreiten der jeweiligen MAK-Werte können die Tanks anschließend in offenem Zustand gehandhabt werden.

Nachfolgend soll das erfindungsgemäße Verfahren anhand eines in der Zeichnung dargestellten Ausführungsbeispiels näher erläutert werden. Es zeigen
- Fig. 1:: eine schematische Darstellung einer Anordnung zur selektiven Enttankung eines Tanks für ein Raumfahrzeug und
- Fig. 2:: eine typische Siedekurve in Form eines Druck-Temperatur-Diagramms

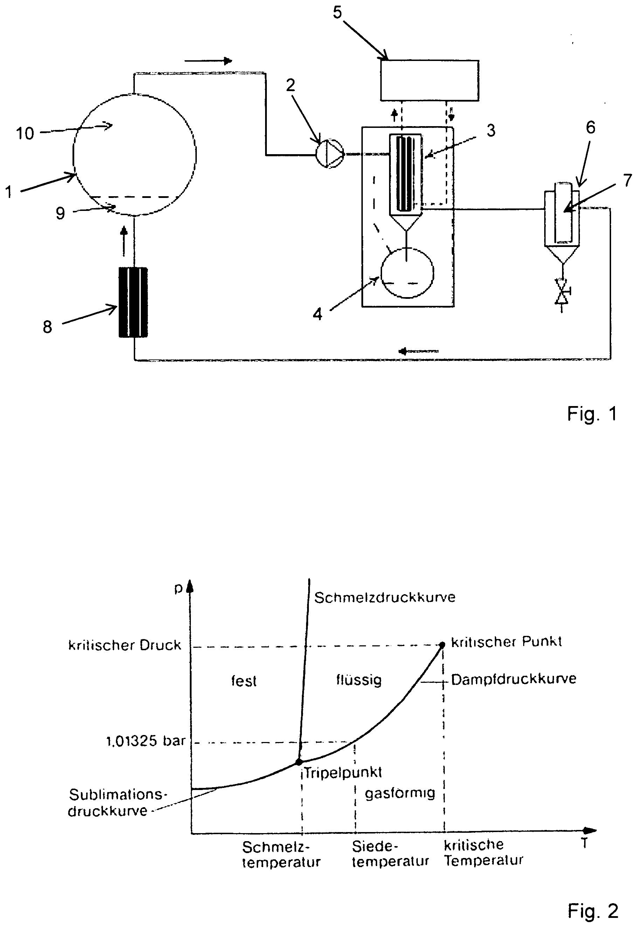

Bei der in Fig. 1 schematisch dargestellten Anordnung zur selektiven Enttankung eines Tanks 1 für ein Raumfahrzeug sind zusätzlich zum Tank 1 eine Gaspumpe 2, eine Kondensationsstufe, bestehend aus einem Kondensor 3 mit einem Kondensattank 4 und einem zugeordneten Kryostaten 5, ein De-Sublimator 6 mit einem Reservoir an flüssigem Stickstoff 7 und ein Wärmetauscher 8 vorgesehen. Die Darstellung zeigt den ursprünglich mit einer Flüssigkeit in Form von Mixed Oxides of Nitrogen, MON, befüllten Tank, nachdem er bis auf eine Restmenge 9 nicht drainierbarer Flüssigkeit entleert wurde, indem der Tankinhalt abgelassen wurde, so daß sich über dem Flüssigkeitsrest 9 ein gasgefüllter Leerraum 10 gebildet hat.

Gemäß dem hier beschriebenen Verfahren wird nunmehr durch Abblasen der Druck im Tank 1 auf den herrschenden Umgebungsdruck von einem bar abgesenkt und im weiteren Verlauf des Verfahrens durch die Zugabe eines Inertgases, im Fall des hier beschriebenen Ausführungsbeispiels Stickstoff, N₂, konstant bei diesem Druck gehalten. Die Dampfphase 10 über der Restmenge 9 der Flüssigkeit wird mittels der Zirkulationspumpe 2, im Fall des hier beschriebenen Ausführungsbeispiels einer Membranpumpe, über die Kondensationsstufe 3 geleitet. Die Temperatur muß dabei möglichst niedrig sein und zur Kondensation des Stickstoffdioxides, NO₂, in Form einer Flüssigabscheidung führen. Da sie jedoch noch nicht zur Fest-Abscheidung (De-Sublimation) führen soll, muß gemäß der nachfolgenden Tabelle, die sich aus Fig. 2 ergibt und die Zustandstemperaturen angibt, die Zieltemperatur bei T₁ ≥ - 11,2 °C liegen.

| Stoff | Tripelpunkt (°C) | Kritischer Punkt (°C) |
|---|---|---|
| NO (Stickstoff-Monoxid) | -164 | -93,2 |
| NO₂ / N₂O₄ (Stickstoff-Tetroxid) | -11,2 | 158 |

Nach dem Ende der Flüssigabscheidung verbleibt im Tank 1 ein NO₂-Partialdruck, der gemäß der NO₂-Dampfdruckkurve der gewählten Temperatur T₁ entspricht. Läuft die Menge der zeitlichen Abscheidung von Stickstoffdioxid, NO₂, gegen Null oder erreicht die NO₂-Konzentration einen vorgegebenen Grenzwert, so erfolgt der nächste Schritt.

In diesem Schritt wird nach dem Entfernen der Hauptmenge an NTO (Stickstoff-Tetroxid, N₂O₄) in flüssiger Form die Temperatur auf eine zweite Zieltemperatur T₂ ≥ 164°C und < -93,2 °C abgesenkt, um das Stickstoff-Monoxid, NO, zu kondensieren. Der für das NO zutreffende Flüssigkeits-Zustandsbereich ergibt sich wiederum aus der in Fig. 2 dargestellten typischen Dampfdruckkurve in Verbindung mit den obigen Tabellenwerten.

Als nächste Maßnahme wird eine Bestimmung der im Tank 1 verbliebenen Restkonzentrationen an Stickstoff-Monoxid, NO, vorgenommen. Hat die in der Anordnung stetig zirkulierende Gasphase, die vorwiegend aus dem Inertgas mit einem Restgehalt an NO besteht, einen konstanten, der Kondensationtemperatur entsprechenden Konzentrationsendwert für das NO erreicht, so kann der Tank 1 dekontaminiert werden. Dies kann auf zwei verschiedene Weisen geschehen.

Bei einem vakuum-kompatiblen Tank wird die Zirkulation beendet und es wird zwecks Dekontamination mittels einer Vakuumpumpe das verbleibende NO/Inertgas-Gemisch bis zum erreichbaren Pumpenenddruck evakuiert. Anschließend wird durch Fluten mit Inertgas und, falls erforderlich, durch kontrolliertes Spülen die für die Einhaltung des MAK-Wertes erforderliche Restkonzentration an NO hergestellt.

Bei einem nicht vakuum-kompatiblen Tank wird das verbliebene NO mittels der Flüssigstickstoff-Kaltstufe 6, 7 bei einer dritten Zieltemperatur T₃, die 78 K oder -195°C entspricht, de-sublimiert und es wird auf diese Weise die kleinstmögliche Restkonzentration bis zum Gleichgewicht hergestellt. Anschließend wird das System unterständiger Kontrolle der Restkonzentrationen an Stickstoff-Monoxid, NO, bis zum Erreichen der für die Einhaltung des MAK-Wertes erforderlichen Restkonzentration umgepumpt.

## Patentansprüche

1. Verfahren zur Entleerung von mit Oxidator-Mischungen vom Typ MON (Mixed Oxides of Nitrogen) befüllten Flüssigkeitstanks für Raumfahrzeuge, **gekennzeichnet durch** die folgenden Schritte:
- der Tank (1) wird bis auf eine Restmenge (9) an nicht drainierbarer Flüssigkeit entleert,
- der Druck im Tank (1) wird auf den Umgebungsdruck abgesenkt und anschließend **durch** Zugabe von Inertgas bei diesem Druck konstant gehalten,
- eine entstandene Dampfphase (10) über der Restmenge (9) der Flüssigkeit wird über eine Kondensationsstufe (3 - 5) geleitet, wobei zunächst eine erste Temperatur (T1) derart gewählt wird, daß sie zur Kondensation von Stickstoffdioxid (NO2), nicht jedoch zu dessen Fest-Abscheidung führt.
- sobald die Menge der Abscheidung von Stickstoffdioxid (NO2) oder dessen Konzentration in der Dampfphase (10) einen vorgegebenen Minimalwert erreicht hat, wird die Temperatur auf eine zweite Temperatur (T2) abgesenkt, bei der in der Dampfphase (10) enthaltenes Stickstoff-Monoxid (NO) kondensiert wird,
- sobald die Konzentration des Stickstoff-Monoxides (NO) in der Dampfphase (10) einen vorgegebenen Minimalwert erreicht hat, wird der Tank (1) dekontaminiert.

2. Verfahren nach Anspruch 1 zur Entleerung eines vakuum-kompatiblen Tanks, **dadurch gekennzeichnet, daß** zur Dekontamination die Zirkulation über die Kondensationsstufe (3 - 5) beendet und das verbleibende NO/Inertgas-Gemisch bis auf einen erreichbaren minimalen Enddruck evakuiert wird und daß anschließend durch Spülen mit einem Inertgas eine vorgebbare Restkonzentration an Stickstoff-Monoxid (NO) eingestellt wird.

3. Verfahren nach Anspruch 2, **dadurch gekennzeichnet, daß** die Evakuierung mittels einer Vakuumpumpe erfolgt.

4. Verfahren nach Anspruch 2 oder 3, **dadurch gekennzeichnet, daß** der Tank (1) kontinuierlich mit dem Inertgas gespült wird.

5. Verfahren nach Anspruch 1 zur Entleerung eines nicht vakuum-kompatiblen Tanks, **dadurch gekennzeichnet, daß** zur Dekontamination das verbliebene Stickstoff-Monoxid (NO) auf eine dritte Temperatur (T3) abgekühlt und bei dieser Temperatur de-sublimiert wird und daß das verbleibende NO/Inertgas-Gemisch unter Kontrolle der Konzentration an Stickstoff-Monoxid (NO) bis zum Erreichen einer vorgebbare Restkonzentration umgewälzt wird.

6. Verfahren nach einem der Ansprüche 1 bis 5, **dadurch gekennzeichnet, daß** die erste Temperatur (T1) wenigstens -11,2 °C beträgt.

7. Verfahren nach einem der Ansprüche 1 bis 6, **dadurch gekennzeichnet, daß** die zweite Temperatur (T2) wenigstens -164 °C aber höchstens -93,2 °C beträgt.

8. Verfahren nach einem der Ansprüche 1 bis 7, **dadurch gekennzeichnet, dass** die dritte Temperatur (T3)-195°C (78 K) beträgt.

## Claims

1. A method for evacuating fluid tanks filled with MON type oxidiser mixtures (MON = mixed oxides of nitrogen) for spacecraft, **characterised by** the following steps:
- the tank (1) is emptied except for a residual amount (9) of non-drainable fluid,
- the pressure in the tank (1) is lowered to ambient pressure and then kept constant at this pressure due to the addition of an inert gas,
- a vapour phase (10) created above the residual amount (9) of the fluid is guided across a condensation stage (3 - 5), wherein initially a first temperature (T1) is chosen such that it leads to the condensation of nitrogen dioxide (NO2), but not the separation of solids thereof,
- as soon as the separated amount of nitrogen dioxide (NO2) or its concentration in the vapour phase (10) has reached a predefined minimum value, the temperature is lowered down to a second temperature (T2), at which nitrogen monoxide (NO) contained in the vapour phase (10) is condensed,
- as soon as the concentration of nitrogen monoxide (NO) in the vapour phase (10) has reached a predefined minimum value, the tank (1) is decontaminated.

2. The method according to claim 1 for evacuating a vacuum-compatible tank, **characterised in that** in order to decontaminate, circulation across the condensation stage (3 - 5) is stopped and the remaining NO/inert gas mixture is evacuated down to an achievable minimum end pressure, and that subsequently a predefinable residual concentration of nitrogen monoxide (NO) is set by rinsing with an inert gas.

3. The method according to claim 2, **characterised in that** evacuation is effected by means of a vacuum pump.

4. The method according to claim 2 or 3, **characterised in that** the tank (1) is continuously rinsed with the inert gas.

5. The method according to claim 1 for evacuating a non-vacuum-compatible tank, **characterised in that** in order to decontaminate, the remaining nitrogen monoxide (NO) is cooled down to a third temperature (T3) and de-sublimated at this temperature, and **in that** the remaining NO/inert gas mixture, under the control of the concentration of nitrogen monoxide (NO), is circulated until a predefinable residual concentration is reached.

6. The method according to one of claims 1 to 5, **characterised in that** the first temperature (T1) is at least -11.2 °C.

7. The method according to one of claims 1 to 6, **characterised in that** the second temperature (T2) is at least -164 °C and at most -93.2 °C.

8. The method according to one of claims 1 to 7, **characterised in that** the third temperature (T3) is - 195 °C (78K).

## Revendications

1. Procédé pour vidanger des réservoirs de liquide remplis avec des mélanges d'oxydants du type MON (Mixed Oxides of Nitrogen ou oxydes d'azote mélangés) pour des véhicules spatiaux, **caractérisé par** les étapes suivantes :
- le réservoir (1) est vidangé jusqu'à une quantité résiduelle (9) de liquide non drainable,
- la pression dans le réservoir (1) est abaissée à la pression ambiante et est ensuite maintenue constante à cette pression par l'addition de gaz inerte,
- une phase gazeuse (10) obtenue au-dessus de la quantité résiduelle (9) de liquide est conduite via un étage de condensation (3 - 5), dans lequel une première température (T1) est tout d'abord sélectionnée de manière à ce qu'elle résulte en une condensation de dioxyde d'azote (NO2) mais non pas en une séparation solide de celui-ci,
- dès que la quantité de séparation du dioxyde d'azote (NO2) ou de la concentration de celui-ci dans la phase gazeuse (10) a atteint une valeur minimale prescrite, la température est abaissée à une deuxième température (T2) à laquelle du monoxyde d'azote (NO) contenu dans la phase gazeuse (10) est condensé,
- dès que la concentration du monoxyde d'azote (NO) dans la phase gazeuse (10) a atteint une valeur minimale prescrite, le réservoir (1) est décontaminé.

2. Procédé selon la revendication 1 pour vidanger un réservoir compatible avec un vide, **caractérisé en ce que**, pour la décontamination, la circulation via l'étage de condensation (3 - 5) est arrêtée et le mélange de gaz inerte/NO résiduel est évacué jusqu'à une pression finale minimale pouvant être atteinte et **en ce qu'**ensuite, par rinçage avec un gaz inerte, une concentration résiduelle prescriptible de monoxyde d'azote (NO) est réglée.

3. Procédé selon la revendication 2, **caractérisé en ce que** l'évacuation s'effectue au moyen d'une pompe à vide.

4. Procédé selon la revendication 2 ou 3, **caractérisé en ce que** le réservoir (1) est rincé en continu avec le gaz inerte.

5. Procédé selon la revendication 1 pour vidanger un réservoir non compatible avec un vide, **caractérisé en ce que**, pour la décontamination, le monoxyde d'azote (NO) résiduel est refroidi à une troisième température (T3) et est dé-sublimé à cette température et **en ce que** le mélange de gaz inerte/NO résiduel est brassé en contrôlant la concentration de monoxyde d'azote (NO) jusqu'à l'atteinte d'une concentration résiduelle prescriptible.

6. Procédé selon l'une des revendications 1 à 5, **caractérisé en ce que** la première température (T1) est au moins de -11,2 °C.

7. Procédé selon l'une des revendications 1 à 6, **caractérisé en ce que** la deuxième température (T2) est au minimum de -164°C, mais au maximum de -93,2 °C.

8. Procédé selon l'une des revendications 1 à 7, **caractérisé en ce que** la troisième température (T3) est de -195 °C (78K).
